# EUROPEAN PATENT APPLICATION

(11) **EP 4 775 702 A1**
(43) Date of publication of application: **15.07.2026**
(21) Application number: 25867326.8
(22) Date of filing: 28.08.2025
(51) Int. Cl.: C22C 21/16, C22C 21/14, C22C 1/02, C22F 1/057, B22D 11/00, C21D 9/00, B23P 15/00

(54) **HIGH-STRENGTH DAMAGE-RESISTANT 2XXX SERIES ALUMINUM ALLOY**

(30) Priority: 15.10.2024 CN 202411438302
(71) Applicant: Chinalco Materials Application Research Institute Co., Ltd, Changping District Beijing 102209 (CN); Southwest Aluminium (Group) Co., Ltd., Chongqing 401326 (CN)
(72) Inventor: LI, Kai, Beijing 102209 (CN); XIAO, Xiang, Beijing 102209 (CN); ZHOU, Hua, Beijing 102209 (CN); FAN, Yunqiang, Beijing 102209 (CN); ZHANG, Siping, Beijing 102209 (CN); LI, Wei, Beijing 102209 (CN); WANG, Guojun, Beijing 102209 (CN); DONG, Hao, Beijing 102209 (CN); LIU, Cheng, Beijing 102209 (CN); LI, Yong, Beijing 102209 (CN); TANG, Linzhi, Beijing 102209 (CN); TANG, Zongyuan, Beijing 102209 (CN); TENG, Minghe, Beijing 102209 (CN)
(74) Representative: Novagraaf Technologies
(86) International application number: PCT/CN2025/117639
(87) International publication number: WO 2026/081684

(57) **Abstract**

Provided is a high-strength and damage-tolerant 2xxx series aluminum alloy, in particular a high-strength and damage-tolerant 2xxx series aluminum alloy, a preparation method therefor, and use thereof. The composition of the aluminum alloy includes: Cu: 4.5-5.5%, Mg: 0.5-1.2%, Mn: 0.2-0.5%, Ag: 0.65-1.2%, Fe<0.1%, Si<0.1%, Zr: 0.05-0.1%, with the balance being Al and inevitable impurities, wherein each inevitable impurity is <0.05%, a total amount of impurities is <0.1%, and a weight ratio of Cu to Mg is 5-10. The present invention optimizes the ratio of major elements and microalloying elements. In the provided Al-Cu-Mg-Ag-Mn-Zr system alloy, the elements cooperate synergistically to form strengthening phases dominated by an Ω phase. The formation of this phase enables the alloy to simultaneously achieve high strength and high damage tolerance.

## Description

This invention claims priority to Chinese Patent Application No. 202411438302.7, filed on October 15, 2024, the invention of which is hereby incorporated by reference in its entirety.

### Technical Field

The present invention relates to the technical field of 2xxx series aluminum alloys, in particular to a high-strength and damage-tolerant 2xxx series aluminum alloy, and more particularly to a high-strength and damage-tolerant 2xxx series aluminum alloy, a preparation method therefor, and use thereof.

### Background

With the rapid development of the aerospace industry, the requirements for comprehensive performance of aircraft structural materials are becoming increasingly stringent. These requirements include excellent fatigue damage resistance, outstanding corrosion resistance, and superior heat resistance. Against this background, aluminum alloys, due to their light weight, high strength, and good processability, remain one of the indispensable primary structural materials in the aerospace field. In particular, Al-Cu-Mg series aluminum alloys, as part of the 2xxx series, not only exhibit high specific strength, but also demonstrate good heat resistance and relatively high fatigue damage resistance. These characteristics have enabled Al-Cu-Mg series aluminum alloys to be widely applied in the aerospace field. They can be processed through various processes such as casting, deformation, and heat treatment to meet the specific property requirements of different components.

The 2X24 aluminum alloy series is a heat-treatable strengthened aluminum alloy belonging to the Al-Cu-Mg system, known for its excellent room-temperature tensile properties, fatigue resistance, as well as good workability under pressure and machinability, and are capable of manufacturing various types of products. They are one of the commonly used skin materials in the aerospace field. 2X24 family alloys such as 2124, 2224, 2324, 2424, and 2524 have been successively developed abroad. Over time, the development of the 2X24 family alloys has evolved from an initial single requirement for static strength to comprehensive requirements for comprehensive performance, including damage tolerance, fatigue crack propagation rate, fracture toughness, and corrosion resistance. This evolution reflects the increasing demands of aerospace materials and the pursuit of higher performance.

In this family, the 2024 aluminum alloy has been widely used in military and civilian aircraft due to its relatively low strength and good ductility. The 2524 aluminum alloy, in contrast, was developed based on the 2024 aluminum alloy by reducing the contents of impurity elements iron and silicon. This improvement enables the 2524 alloy to exhibit significant advantages in damage tolerance, fatigue resistance, and corrosion resistance, making it particularly suitable for producing large integrated components and thus considered an ideal aircraft skin material.

The continuous advancement of the aerospace industry has led to increasingly stringent requirements for the material properties of aluminum alloys, particularly in terms of static strength, damage tolerance, and corrosion resistance. In order to meet these requirements, Al-Cu-Mg-Ag alloys were developed. Based on conventional Al-Cu-Mg alloys, the addition of a trace amount of silver element significantly improves the strength, heat resistance, and damage tolerance of the material. Since the introduction of the KO-1 alloy in 1962, this alloy system has undergone continuous optimization and innovation. In the 1980s, the Polmear team developed a novel heat-resistant Al-Cu-Mg-Ag alloy based on the 2219 alloy, achieving a yield strength as high as 520 MPa. Subsequently, through slight adjustments to the composition of the 2519 aluminum alloy, two alloys, C415 and C416, were developed. These alloys exhibited significant improvements in heat resistance, but further improvement in damage tolerance was still needed.

In 1999, a commercial Al-Cu-Mg-Ag alloy was introduced and registered under the designation 2039. Based on this, two novel heat-resistant and damage-tolerant aluminum alloys, 2040 and 2139, were successively introduced in 2003 and 2004, respectively. The 2040 alloy improves heat resistance by increasing the Mn content, potentially at the expense of damage tolerance. In contrast, the 2139 alloy improves damage tolerance by reducing the contents of Mn and Mg, but its tensile strength decreases to approximately 480 MPa.

In 2013, in response to the pressure design requirements of fuselage skins and pressure bulkheads for fifth-generation advanced fighter aircraft such as the F-22 and F-35, Alcoa Corporation developed a novel Al-Cu-Mg-Ag alloy, which was registered under the designation 2029. Under the condition that the crack propagation rate of 2029-T8 clad aluminum sheets is comparable to that of the 2524 alloy, the 2029-T8 alloy exhibits outstanding properties, including a yield strength of 380 MPa, a tensile strength exceeding 421 MPa, and a plane stress fracture toughness exceeding 104MPa·m^{1/2}, which are far higher than those of the 2524 alloy.

In order to further improve the comprehensive performance of Al-Cu-Mg-Ag series alloys, in recent years, numerous research teams have focused on exploring the possibility of composite microalloying by combining other elements with Ag element. Research by Shyam has demonstrated that the addition of Sc element to the Al-Cu-Mg-Ag alloy can promote an in-situ phase transformation of a Cu-rich phase (Al₂Cu) at a high temperature of 400 °C. During this process, Sc atoms diffuse and occupy interstitial sites of the Ω phase, forming a new V phase (Sc₂AlSi₂). This new phase not only maintains a high density but also significantly enhances thermal stability, enabling the alloy to exhibit excellent strength and creep resistance at 400 °C.

Research by Xia Yage et al. focused on the influence of Zr element on the properties of Al-Cu-Mg-Ag alloys. They found that the addition of Zr can effectively refine the grains of the alloy, thereby improving the room-temperature mechanical properties of the alloy, including tensile strength, yield strength, and elongation. However, the addition of Zr also increases grain boundary area, which leads to more severe grain boundary sliding under high temperature and high stress conditions, thereby weakening the creep resistance of the alloy.

Although extensive research has been conducted in the field of composite microalloying, most research still focuses on improving a single property of the alloy, such as strength or high-temperature performance, rather than comprehensively considering how to further enhance the overall properties of the material through integrated strengthening and toughening mechanisms. Future research in this field requires more in-depth exploration to achieve comprehensive improvement in alloy properties.

With the trend toward larger aircraft sizes and longer service lives, more stringent requirements are imposed on structural weight reduction and service life for new aerospace aluminum alloys. The aluminum alloys with higher specific strength and higher damage tolerance have become important directions for the future development of aerospace aluminum alloy materials. Al-Cu-Mg-Ag series alloys are considered as important candidates for the future development of aerospace aluminum alloys due to their unique properties. How to achieve an optimal microstructural matching mode to improve the comprehensive performance of Al-Cu-Mg-Ag series alloys through scientific design of major and microalloying elements, together with control of processing techniques, remains an urgent problem to be solved for Al-Cu-Mg-Ag series aluminum alloys and a crucial need in the development of the aerospace field.

### Summary

A main objective of the present invention is to provide a high-strength and damage-tolerant 2xxx series aluminum alloy, a preparation method therefor, and use thereof, so as to solve the problem in the related art that aerospace aluminum alloys have difficulty in simultaneously achieving high specific strength and high damage tolerance.

In order to achieve the above objective, according to one aspect of the present invention, a high-strength and damage-tolerant 2xxx series aluminum alloy is provided. By weight percentage, the composition of the aluminum alloy includes: Cu: 4.5-5.5%, Mg: 0.5-1.2%, Mn: 0.2-0.5%, Ag: 0.65-1.2%, Fe<0.1%, Si<0.1%, Zr: 0.05-0.1%, with the balance being Al and inevitable impurities. Each inevitable impurity is <0.05%, a total amount of impurities is <0.1%, and a weight ratio of Cu to Mg is 5-10.

Further, by weight percentage, the composition of the aluminum alloy includes: Cu: 4.8-5.2%, Mg: 0.6-0.9%, Mn: 0.2-0.5%, Ag: 0.7-1.0%, Fe<0.1%, Si<0.1%, Zr: 0.05-0.08%, with the balance being Al and inevitable impurities. Each inevitable impurity is <0.05%, the total amount of impurities is <0.1%, and the weight ratio of Cu to Mg is 6-8.

Further, a weight ratio of Ag to Mg is 1-1.5; and/or a sum of weight percentages of Fe and Si is <0.15%.

Further, in the 2xxx series aluminum alloy, a volume fraction of an Ω phase is 4-6%; and/or a volume fraction of an S phase is <1%; and/or a volume fraction of a θ phase is <1%. Preferably, a ratio of a volume of the Ω phase to a sum of volumes of the S phase and the θ phase is >5.

According to another aspect of the present invention, a preparation method for the above high-strength and damage-tolerant 2xxx series aluminum alloy is provided, including the following steps: S1, sequentially mixing, melting, refining, and casting raw materials according to a compositional ratio to obtain an aluminum alloy ingot; S2, sequentially subjecting the aluminum alloy ingot to homogenization annealing and cooling to obtain a homogenized ingot; S3, sequentially heating and processing the homogenized ingot to obtain a processed plate; S4, sequentially subjecting the processed plate to solid solution treatment and quenching to obtain a quenched plate; and S5, sequentially subjecting the quenched plate to pre-deformation and aging treatment to obtain the 2xxx series aluminum alloy.

Further, in the S2, a temperature of the homogenization annealing is 450-550 °C, and a time thereof is18-22 h.

Further, in the S3, a final temperature of the heating is 360-460 °C, and a holding time thereof is 5-10 h; and/or the processing includes one or more of rolling, extrusion, and forging.

Further, in the S4, a temperature of the solid solution treatment is 480-540 °C, and a time thereof is 2-1200 min; and/or the quenching includes spray quenching and/or immersion quenching. Preferably, when the quenching is the spray quenching, a cooling rate of the quenching is >500 °C/min. Preferably, when the quenching is the immersion quenching, a cooling rate of the quenching is >600 °C/min.

Further, in the S5, the aging includes natural aging and/or artificial aging. Preferably, when the aging is the natural aging, a time of the aging is ≥96 h, and a total amount of the pre-deformation is ≤2%. More preferably, the pre-deformation includes pre-stretching and/or straightening treatment. Preferably, when the aging is the artificial aging, a temperature of the aging is 150-250 °C, a time thereof is 5-20 h, and a total amount of the pre-deformation is 1-4%. More preferably, the pre-deformation includes pre-stretching.

According to another aspect of the present invention, use of the above high-strength and damage-tolerant 2xxx series aluminum alloy is provided.

The present invention optimizes the ratio of major elements and microalloying elements. In the provided Al-Cu-Mg-Ag-Mn-Zr system alloy, the elements cooperate synergistically to form strengthening phases dominated by the Ω phase. The formation of this phase enables the alloy to simultaneously achieve high strength and high damage tolerance. In particular, by controlling the weight ratio of Cu to Mg within a specific range, the present invention ensures the formation of a large amount of dispersed Ω phases in the material while reducing the formation of the S phase, thereby achieving an optimal matching mode of strengthening phases and effectively improving the damage tolerance of the material. In addition, by controlling impurity elements and other trace elements, the present invention effectively reduces the adverse effects of coarse insoluble compounds and dispersed phases on damage tolerance, thereby enabling the 2xxx series aluminum alloy to simultaneously achieve high strength and high damage tolerance, and providing a material selection basis for structural weight reduction design and long-life design of next-generation aircraft.

### Brief Description of the Drawings

The drawings of the specification, which constitute a part of the present invention, are intended to provide a further understanding of the present invention, and the exemplary embodiments of the present invention and the description thereof are intended to explain the present invention and do not constitute an undue limitation on the present invention. In the drawings:

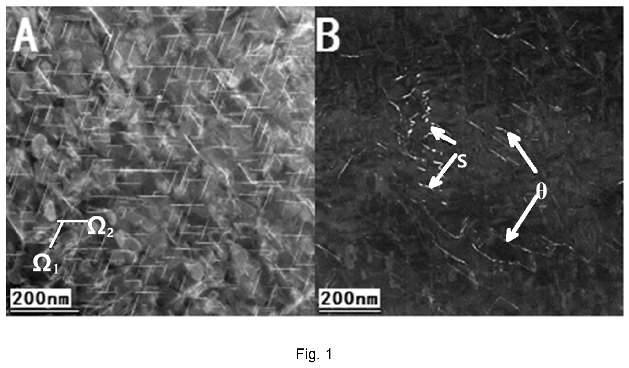

Fig. 1 shows transmission electron microscopy micrographs of a 2xxx series aluminum alloy according to Embodiment 1 of the present invention.

### Detailed Description of the Embodiments

It is to be noted that the embodiments in the present invention and features in the embodiments may be combined with each other without conflict. The present invention is described below with reference to the drawings and in conjunction with the embodiments in detail.

As described in the Background of the present invention, there is a problem in the related art that aerospace aluminum alloys have difficulty in simultaneously achieving high specific strength and high damage tolerance. In order to solve the above problem, in one typical implementation of the present invention, a high-strength and damage-tolerant 2xxx series aluminum alloy is provided. By weight percentage, the composition of the aluminum alloy includes: Cu: 4.5-5.5%, Mg: 0.5-1.2%, Mn: 0.2-0.5%, Ag: 0.65-1.2%, Fe<0.1%, Si<0.1%, Zr: 0.05-0.1%, with the balance being Al and inevitable impurities. Each inevitable impurity is <0.05%, a total amount of impurities is <0.1%, and a weight ratio of Cu to Mg is 5-10.

Through extensive experiments, the inventors have unexpectedly found that, by controlling the weight percentages of Cu and Mg in the alloy and the weight ratio therebetween under the above conditions, the formation of an S phase (Al₂CuMg phase) in the alloy can be effectively suppressed, thereby providing favorable conditions for the formation of a large amount of dispersed Ω phases (Al₂Cu phase). In the 2xxx series aluminum alloy of the present invention, Mg and Ag elements interact to form atomic clusters, giving the Ω phase a nucleation advantage in competition with a θ phase (Al₂Cu phase), which can increase the proportion and precipitation effect of the Ω phase. Based on the mechanism of interaction between the Ω phase and dislocations, the damage tolerance of the alloy may be improved. However, if the weight ratio of Cu to Mg is excessively high, it may result in an excessively high proportion of a θ phase, which may easily reduce the strengthening and toughening effects of the material. Conversely, if this ratio is excessively low, it may result in an excessively high proportion of the S phase, which may easily decrease the damage tolerance of the material. Therefore, the present invention limits the contents of Cu and Mg and the weight ratio therebetween within the above specific ranges.

The present invention also adds 0.65-1.2% of Ag element. Based on extensive research and industrial practice, the inventors have found that the addition of Ag element can effectively strengthen and toughen the microstructure, promoting the formation of strengthening phases dominated by the Ω phase in the 2xxx series aluminum alloy. Within the above range, the formation advantage of the Ω phase is significant. However, when the Ag content exceeds 1.2%, the total number of the Ω phase reaches an upper limit, and even if the Ag content continues to increase, the effect on increasing the content of the Ω phase is still limited. When the Ag content is excessively low, it may result in insufficient formation of Mg atomic clusters, which may affect the number of nuclei of the Ω phase. Therefore, the present invention limits the Ag content within the above specified range.

Furthermore, trace amounts of Mn and Zr elements are added as microalloying elements in the present invention. The addition of Mn and Zr elements can refine the grains of the material, improve the comprehensive performance of the material, and also help control the morphology and distribution of intergranular eutectic phases (such as the θ phase and S phase) at grain boundaries in the ingot, thereby facilitating subsequent microstructure control during heat treatment processes, such as homogenization and solid solution treatment. However, if the Mn content is excessively high, it may result in an increase in the size and number of Mn-containing insoluble phases, thereby reducing the damage tolerance. If the Mn content is excessively low, it is difficult to effectively refine the grains. Similarly, if the Zr content is excessively high, it may result in an increase in the number of Zr-containing dispersed phases, thereby reducing the damage tolerance. If the Zr content is excessively low, the effect on grain refinement is limited. Therefore, the present invention specifically limits the weight percentage of Mn to be 0.2-0.5% and the weight percentage of Zr to be 0.05-0.1%, respectively.

In addition, the present invention limits the content of impurity elements such as Fe and Si. These impurity elements may form coarse insoluble phases (e.g., Al₇Cu₂Fe phase) during the melting of the ingot. Such insoluble phases are difficult to eliminate in subsequent heat treatment processes, which may increase crack nucleation sites in the material and shorten the spacing of crack propagation, thereby severely affecting the damage tolerance of the final product. Therefore, the present invention limits the contents of these impurity elements to Fe<0.1wt% and Si<0.1wt%.

In summary, the present invention optimizes the ratio of major elements and microalloying elements. In the provided Al-Cu-Mg-Ag-Mn-Zr system alloy, the elements cooperate synergistically to form strengthening phases dominated by the Ω phase. The formation of this phase enables the alloy to simultaneously achieve high strength and high damage tolerance. In particular, by controlling the weight ratio of Cu to Mg within a specific range, the present invention ensures the formation of a large amount of dispersed Ω phases in the material while reducing the formation of the S phase, thereby achieving an optimal matching mode of strengthening phases and effectively improving the damage tolerance of the material. In addition, by controlling impurity elements and other trace elements, the present invention effectively reduces the adverse effects of coarse insoluble compounds and dispersed phases on damage tolerance, thereby enabling the 2xxx series aluminum alloy to simultaneously achieve high strength and high damage tolerance.

Typically, but not limiting, in the composition of the aluminum alloy, the weight percentage of Cu is 4.5%, 4.8%, 5%, 5.2%, 5.5%, or a range value formed by any two of these values; the weight percentage of Mg is 0.5%, 0.6%, 0.8%, 0.9%, 1%, 1.2%, or a range value formed by any two of these values; the weight ratio of Cu to Mg is 5, 6, 7, 8, 9, 10, or a range value formed by any two of these values; the weight percentage of Mn is 0.2%, 0.3%, 0.4%, 0.5%, or a range value formed by any two of these values; and the weight percentage of Ag is 0.65%, 0.7%, 0.8%, 0.9%, 1%, 1.1%, 1.2%, or a range value formed by any two of these values.

In order to further optimize the regulation effect on the alloy microstructure, in one preferred implementation, by weight percentage, the composition of the aluminum alloy includes: Cu: 4.8-5.2%, Mg: 0.6-0.9%, Mn: 0.2-0.5%, Ag: 0.7-1.0%, Fe<0.1%, Si<0.1%, Zr: 0.05-0.08%, with the balance being Al and inevitable impurities. Each inevitable impurity is <0.05%, the total amount of impurities is <0.1%, and the weight ratio of Cu to Mg is 6-8.

In order to further suppress the formation of the S phase (Al₂CuMg phase) and increase the proportion of the Ω phase (Al₂Cu phase), in one preferred implementation, a weight ratio of Ag to Mg is 1-1.5. The weight ratio of Ag to Mg is 1, 1.1, 1.2, 1.3, 1.4, 1.5, or a range value formed by any two of these values. Preferably, the weight ratio of Ag to Mg is 1-1.3. For the purpose of further reducing the content of insoluble phases and thereby more effectively improving the damage tolerance of the alloy, in one preferred implementation, a sum of weight percentages of Fe and Si is <0.15%.

In one preferred implementation, in the 2xxx series aluminum alloy, a volume fraction of the Ω phase is 4-6%, preferably 5-6%; and/or a volume fraction of the S phase is <1%, preferably <0.5%; and/or a volume fraction of the θ phase is <1%, preferably <0.5%. Preferably, a ratio of a volume of the Ω phase to a sum of volumes of the S phase and the θ phase is >5. The alloy under the above conditions can better achieve high strength and high damage tolerance. Typically, but not limiting, the volume fraction of the Ω phase is 4%, 4.5%, 5%, 5.5%, 6%, or a range value formed by any two of these values.

As described above, the 2xxx-series aluminum alloy with the specific composition of the present invention contains a high fraction of the Ω phase, which can significantly improve the damage tolerance of the alloy while meeting the alloy strength requirements. Specifically, in one preferred implementation, the 2xxx series aluminum alloy has a yield strength R_{p0.2}≥400 MPa, a tensile strength Rₘ≥500 MPa, an elongation ≥10%, a plane stress fracture toughness K_{1C}≥50 MPa·m^{1/2} or a plane stress fracture toughness Kapp≥110 MPa·m^{1/2}, and a crack propagation rate (ΔK=33 MPa·m^{1/2})≤3×10⁻³ mm/c. On the basis of exhibiting excellent crack propagation resistance, the 2xxx series aluminum alloy of the present invention significantly improves the strength of conventional Al-Cu-Mg series alloys, thereby providing a material selection basis for the structural weight reduction design and long-life design of next-generation aircraft.

In another typical implementation of the present invention, a preparation method for the above high-strength and damage-tolerant 2xxx series aluminum alloy is further provided, including the following steps: S1, sequentially mixing, melting, refining, and casting raw materials according to a ratio to obtain an aluminum alloy ingot; S2, sequentially subjecting the aluminum alloy ingot to homogenization annealing and cooling to obtain a homogenized ingot; S3, sequentially heating and processing the homogenized ingot to obtain a processed plate; S4, sequentially subjecting the processed plate to solid solution treatment and quenching to obtain a quenched plate; and S5, sequentially subjecting the quenched plate to pre-deformation and aging treatment to obtain the 2xxx series aluminum alloy.

Firstly, the raw materials are mixed, melted, refined, and cast. This process can effectively remove gases and impurities from a melt. Then, the obtained ingot is subjected to homogenization annealing to eliminate compositional segregation and homogenize the elements, which helps improve the performance stability of the aluminum alloy. Next, heating and processing are performed to refine the grains of the aluminum alloy, obtaining plates of specific dimensions. Subsequently, the plate is subjected to solid solution treatment to dissolve the soluble phases, followed by quenching, so that the quenched microstructure is uniformly distributed. The quenched plate is then subjected to pre-deformation to eliminate residual stress inside the alloy, making the alloy microstructure uniform and stable. Finally, aging is performed to promote internal phase transformation of the alloy and improve the strength and hardness of the alloy, thereby obtaining the above 2xxx series aluminum alloy. By using the preparation method of the present invention, the components of the 2xxx-series aluminum alloy with the specific composition of the present invention can be made uniform and stable.

In one preferred implementation, in the S2, a temperature of the homogenization annealing is 450-550 °C, and a time thereof is18-22 h. Under the above conditions, atomic diffusion and phase transformation processes can proceed more fully, resulting in a more uniform distribution of the elements. Regarding the cooling rate, conventional parameters in the technical field can be used, which is not specifically limited herein.

In one preferred implementation, in the S3, a final temperature of the heating is 360-460 °C, and a holding time thereof is 5-10 h. Under the above conditions, the alloy can exhibit higher hot workability, which facilitates smooth hot deformation of the alloy. Excessively low or excessively high temperatures may lead to hot deformation, thereby increasing the risk of cracking during processing.

The processing techniques of the present invention may employ conventional techniques in the technical field. Through extensive experimental research and in combination with the specific composition of the alloy of the present invention, the inventors have optimized the parameters of the various processing techniques. In one preferred implementation, the processing includes one or more of rolling, extrusion, and forging. Preferably, when the processing is rolling, the rolling includes hot rolling and cold rolling performed sequentially. Hot rolling is performed for 10-15 passes, with a total deformation of ≥50% and a final thickness of 4-200 mm. Cold rolling is performed for 3-5 passes, with a total deformation of ≥30% and a final thickness of 1-5 mm. Under the above conditions, through the regulation of hot deformation and cold deformation, the material can obtain a more uniform and finer grain structure, thereby achieving a better matching of the strength, ductility, and damage tolerance.

In one preferred implementation, in the S4, a temperature of the solid solution treatment is 480-540 °C, and a time thereof is 2-1200 min. Under the above conditions, the soluble phases in the alloy with the specific composition of the present invention can be fully dissolved, which is more conducive to improving the strength of the alloy. In addition, the crack propagation resistance of the alloy of the present invention can be further improved, which is more conducive to improving the damage tolerance of the alloy. However, if the temperature is excessively high, there is a risk of overheating the soluble phases in the alloy, which may lead to material scrap. If the temperature is excessively low, the solute atoms may not be fully dissolved, limiting the effect on improving the strength and damage tolerance of the alloy.

In order to make the quenched microstructure of the alloy more uniform, thereby further improving the strength and damage tolerance of the alloy, in one preferred implementation, the quenching includes spray quenching and/or immersion quenching. Preferably, when the quenching is the spray quenching, a cooling rate of the quenching is >500 °C/min, and a final temperature is 25-40 °C. Preferably, when the quenching is the immersion quenching, a cooling rate of the quenching is >600 °C/min, and a final temperature is 25-40 °C.

For the purpose of enabling the Ω phase to precipitate in a more uniform and dispersed manner, thereby further improving the strength and damage tolerance of the alloy, in one preferred implementation, in the S5, the aging includes natural aging and/or artificial aging. Preferably, when the aging is the natural aging, a time is ≥96 h, and a total amount of the pre-deformation is ≤2%. More preferably, the pre-deformation includes pre-stretching and/or straightening treatment. Preferably, when the aging is the artificial aging, a temperature of the aging is 150-250 °C, a time thereof is 5-20 h, and a total amount of the pre-deformation is 1-4%. More preferably, the pre-deformation includes pre-stretching. On the basis of exhibiting excellent crack propagation resistance, the 2xxx series aluminum alloy of the present invention significantly improves the strength of conventional Al-Cu-Mg series alloys. In the artificially aged state, the alloy exhibits a yield strength at least 100 MPa higher than that of 2524-T3 alloy, while maintaining damage tolerance at a level comparable to that of 2524 alloy.

In order to more effectively prevent excessive pre-deformation resistance or deformation defects caused by aging hardening, in one preferred implementation, the pre-deformation may be performed online or offline, with the time interval from completion of the quenching to completion of the pre-deformation not exceeding 6 h.

In another typical implementation of the present invention, use of the above high-strength and damage-tolerant 2xxx series aluminum alloy in the aerospace field is further provided. Through a comprehensive strengthening and toughening mechanism, the present invention enables the 2xxx series aluminum alloy to achieve high strength and high damage tolerance. When used in the aerospace field, the 2xxx series aluminum alloy of the present invention enables lighter structures and longer service life for aircraft and other devices.

The present invention is further described in detail below in conjunction with the specific embodiments. These embodiments cannot be construed as limiting the scope of protection claimed in the present invention.

### Embodiment 1

The compositional ratios of the 2xxx series aluminum alloy were shown in Table 1.

At S1, according to the compositional ratio of the 2xxx series aluminum alloy, raw materials were sequentially mixed, melted, and refined to remove gas and impurities, and then a flat ingot with a thickness of 400 mm and a width of 1500 mm was prepared under semi-continuous casting conditions.

At S2, the ingot was subjected to homogenization treatment at 500 °C for 20 h to obtain a homogenized ingot.

At S3, the homogenized ingot was cooled to 25 °C. Subsequently, the ingot was surface-milled and then subjected to heating treatment in a heating furnace at 460 °C for 10 h, followed by rough rolling for 10 passes with a total deformation of 95%, and then finish hot rolling for 3 passes with a total deformation of 60%, thereby obtaining a hot-rolled plate with a thickness of 8 mm. The hot-rolled plate was subjected to cold rolling deformation on a cold rolling mill for 5 passes with a total deformation of 75%, thereby obtaining a cold-rolled plate with a thickness of 2 mm.

At S4, the cold-rolled plate was subjected to solid solution treatment at 500 °C for 5 min, followed by spray quenching to 25 °C at a cooling rate of 200 °C/s, thereby obtaining a quenched plate.

At S5, the quenched plate was subjected to 2% pre-stretching deformation, followed by artificial aging at 180 °C for 15 h, thereby obtaining a T8-state 2xxx-series aluminum alloy.

Transmission electron microscopy micrographs of the obtained 2xxx-series aluminum alloy were shown in Fig. 1, where Fig. 1A was a dark-field transmission electron microscopy micrograph of the 2xxx series aluminum alloy, showing the Ω phase marked along a <111> zone axis, and Fig. 1B as a dark-field transmission electron microscopy micrograph of the 2xxx series aluminum alloy, showing the S phase and θ phase marked along a non-standard zone axis. The alloy was configured to manufacture aircraft in the aerospace field.

### Embodiments 2-12

Embodiments 2-12 differed from Embodiment 1 only as follows.

The compositional ratios of the 2xxx series aluminum alloy were different. The specific compositions were shown in Table 1.

### Embodiment 13

Embodiment 13 differed from Embodiment 1 only as follows.

The compositional ratios of the 2xxx series aluminum alloy were shown in Table 1.

At S1, according to the compositional ratios of the 2xxx series aluminum alloy, raw materials were sequentially mixed, melted, and refined to remove gas and impurities, and then a round ingot with a diameter of φ400 mm was prepared under semi-continuous casting conditions.

At S2, the ingot was subjected to homogenization treatment at 500 °C for 20 h to obtain a homogenized ingot.

At S3, the homogenized ingot was cooled to 25 °C. Subsequently, the ingot was peeled and sawn, followed by heating treatment in a heating furnace at 460 °C for 10 h, and then extruded on an extrusion machine into an extruded strip plate with dimensions of 150 mm × 40 mm.

At S4, the prepared extruded strip plate was subjected to solid solution treatment at 480 °C for 5 h and then at 500 °C for 2 h, followed by spray water quenching at a cooling rate of 800 °C/min, thereby obtaining a quenched strip plate.

At S5, the quenched strip plate was subjected to 2% pre-stretching deformation, followed by artificial aging at 180 °C for 18 h, thereby obtaining the 2xxx series aluminum alloy, configured to manufacture aircraft in the aerospace field.

### Embodiments 14-18

Embodiments 14-18 differed from Embodiment 1 only as follows.

The compositional ratios of the 2xxx series aluminum alloy were different. The specific compositions were shown in Table 1.

### Embodiment 19

Embodiment 19 differed from Embodiment 1 only as follows.

The preparation process parameters of the 2xxx series aluminum alloy were different.

At S1, according to the compositional ratio of the 2xxx series aluminum alloy in Embodiment 1, raw materials were sequentially mixed, melted, and refined to remove gas and impurities, and then a flat ingot with a thickness of 400 mm and a width of 1500 mm was prepared under semi-continuous casting conditions.

At S2, the ingot was subjected to homogenization treatment at 450 °C for 22 h to obtain a homogenized ingot.

At S3, the homogenized ingot was cooled to 25 °C. Subsequently, the ingot was surface-milled and then subjected to heating treatment in a heating furnace at 360 °C for 10 h, followed by rough rolling for 12 passes with a total deformation of 97%, and then finish hot rolling for 3 passes with a total deformation of 60%, thereby obtaining a hot-rolled plate with a thickness of 5 mm. The hot-rolled plate was subjected to cold rolling deformation on a cold rolling mill for 3 passes with a total deformation of 60%, thereby obtaining a cold-rolled plate with a thickness of 2 mm.

At S4, the cold-rolled plate was subjected to solid solution treatment at 480 °C for 1200 min, followed by spray quenching treatment at a cooling rate of 550 °C/ h, thereby obtaining a quenched plate.

At S5, the quenched plate was subjected to 4% pre-stretching deformation, followed by artificial aging at 150 °C for 20 h, thereby obtaining the 2xxx-series aluminum alloy.

### Embodiment 20

Embodiment 20 differed from Embodiment 1 only as follows.

The preparation process parameters of the 2xxx series aluminum alloy were different.

At S1, according to the compositional ratio of the 2xxx series aluminum alloy in Embodiment 1, raw materials were sequentially mixed, melted, and refined to remove gas and impurities, and then a flat ingot with a thickness of 400 mm and a width of 1500 mm was prepared under semi-continuous casting conditions.

At S2, the ingot was subjected to homogenization treatment at 550 °C for 18 h to obtain a homogenized ingot.

At S3, the homogenized ingot was cooled to 30 °C. Subsequently, the ingot was surface-milled and then subjected to heating treatment in a heating furnace at 460 °C for 5 h, followed by rough rolling for 10 passes with a total deformation of 95%, and then finish hot rolling for 3 passes with a total deformation of 60%, thereby obtaining a hot-rolled plate with a thickness of 8 mm. The hot-rolled plate was subjected to cold rolling deformation on a cold rolling mill for 3 passes with a total deformation of 62.5%, thereby obtaining a cold-rolled plate with a thickness of 3 mm.

At S4, the cold-rolled plate was subjected to solid solution treatment at 540 °C for 2 min, followed by immersion quenching treatment at a cooling rate of 620 °C/h, thereby obtaining a quenched plate.

At S5, the quenched plate was subjected to 1% pre-stretching deformation, followed by artificial aging at 250 °C for 5 h, thereby obtaining the 2xxx-series aluminum alloy.

### Comparative Embodiments 1-4

Comparative Embodiments 1-4 differed from Embodiment 1 only as follows.

The compositional ratios of the 2xxx series aluminum alloy were different. The specific compositions were shown in Table 1.

### Comparative Embodiments 5-8

Comparative Embodiments 5-8 differed from Embodiment 13 only as follows.

The compositional ratios of the 2xxx series aluminum alloy were different. The specific compositions were shown in Table 1.

The test results of crystal phase volume fraction, room temperature tensile properties, fracture toughness, and crack propagation rate performance of the 2xxx series aluminum alloys prepared in the above Embodiments and Comparative Embodiments were shown in Table 2.

### Test Methods

Volume fractions of Ω phase, S phase, and θ phase were analyzed and calculated in combination with transmission electron microscopy micrographs.

Yield strength, tensile strength, and elongation were tested in accordance with GB/T228.1-2021.

Plane stress fracture toughness (Kapp), crack propagation rate, and plane strain fracture toughness (K_{1C}) were tested using a fatigue testing machine.

**Table 1**

| Composition | Cu | Mg | Mn | Ag | Fe | Si | Zr | Al | Impurity element |
|---|---|---|---|---|---|---|---|---|---|
| Embodiment 1 | 5.02 | 0.82 | 0.41 | 0.83 | 0.05 | 0.04 | 0.06 | Balance | <0.1 |
| Embodiment 2 | 4.55 | 0.85 | 0.39 | 0.85 | 0.05 | 0.05 | 0.06 | Balance | <0.1 |
| Embodiment 3 | 5.45 | 0.79 | 0.40 | 0.82 | 0.04 | 0.05 | 0.06 | Balance | <0.1 |
| Embodiment 4 | 4.98 | 0.51 | 0.42 | 0.87 | 0.04 | 0.04 | 0.05 | Balance | <0.1 |
| Embodiment 5 | 4.95 | 0.97 | 0.40 | 0.83 | 0.05 | 0.05 | 0.07 | Balance | <0.1 |
| Embodiment 6 | 4.99 | 0.83 | 0.41 | 1.18 | 0.04 | 0.04 | 0.06 | Balance | <0.1 |
| Embodiment 7 | 4.5 | 0.90 | 0.20 | 1.2 | 0.05 | 0.04 | 0.08 | Balance | <0.1 |
| Embodiment 8 | 5.45 | 0.6 | 0.50 | 0.65 | 0.04 | 0.04 | 0.06 | Balance | <0.1 |
| Embodiment 9 | 5.20 | 0.7 | 0.42 | 0.72 | 0.05 | 0.04 | 0.06 | Balance | <0.1 |
| Embodiment 10 | 4.82 | 0.61 | 0.37 | 0.88 | 0.05 | 0.05 | 0.07 | Balance | <0.1 |
| Embodiment 11 | 4.98 | 0.70 | 0.41 | 0.99 | 0.04 | 0.04 | 0.05 | Balance | <0.1 |
| Embodiment 12 | 5.03 | 0.80 | 0.42 | 0.82 | 0.05 | 0.04 | 0.06 | Balance | <0.1 |
| Embodiment 13 | 5.04 | 0.81 | 0.43 | 0.79 | 0.04 | 0.04 | 0.05 | Balance | <0.1 |
| Embodiment 14 | 4.52 | 0.83 | 0.38 | 0.81 | 0.05 | 0.05 | 0.08 | Balance | <0.1 |
| Embodiment 15 | 5.49 | 0.79 | 0.43 | 0.85 | 0.04 | 0.04 | 0.06 | Balance | <0.1 |
| Embodiment 16 | 5.01 | 0.53 | 0.42 | 0.82 | 0.05 | 0.04 | 0.06 | Balance | <0.1 |
| Embodiment 17 | 4.99 | 0.98 | 0.41 | 0.83 | 0.05 | 0.04 | 0.07 | Balance | <0.1 |
| Embodiment 18 | 4.94 | 0.81 | 0.40 | 1.16 | 0.04 | 0.04 | 0.06 | Balance | <0.1 |
| Comparative Embodiment 1 | 5.05 | 0.80 | 0.44 | 0.34 | 0.05 | 0.04 | 0.06 | Balance | <0.1 |
| Comparative Embodiment 2 | 5.04 | 0.81 | 0.41 | 0.81 | 0.05 | 0.04 | <0.001 | Balance | <0.1 |
| Comparative Embodiment 3 | 5.03 | 0.85 | 0.39 | 0.83 | 0.15 | 0.18 | 0.06 | Balance | <0.1 |
| Comparative Embodiment 4 | 4.25 | 1.44 | 0.61 | <0.001 | 0.05 | 0.05 | <0.001 | Balance | <0.1 |
| Comparative Embodiment 5 | 5.03 | 0.82 | 0.41 | 0.32 | 0.04 | 0.04 | 0.06 | Balance | <0.1 |
| Comparative Embodiment 6 | 5.04 | 0.77 | 0.39 | 0.81 | 0.04 | 0.04 | <0.001 | Balance | <0.1 |
| Comparative Embodiment 7 | 5.02 | 0.82 | 0.37 | 0.81 | 0.16 | 0.19 | 0.05 | Balance | <0.1 |
| Comparative Embodiment 8 | 4.28 | 1.41 | 0.63 | <0.001 | 0.06 | 0.04 | <0.001 | Balance | <0.1 |

**Table 2**

| Item | Volume fraction of Ω phase (%) | Volume fraction of S phase (%) | Volume fraction of θ phase (%) | Yield strength R_{p0.2} (MPa) | Tensile strength Rₘ (MPa) | Elongation after fracture A (%) | Plane stress fracture toughness Kapp (MPa·m^{1 /2}) | Crack propagation rate (×10⁻³ mm/c) | Plane strain fracture toughness K_{1C} (MPa·m¹ /²) |
|---|---|---|---|---|---|---|---|---|---|
| Embodiment 1 | 5.8 | 0.2 | 0.3 | 484 | 515 | 11.5 | 134 | 2.82 | / |
| Embodiment 2 | 4.3 | 0.4 | 0.3 | 451 | 502 | 12 | 141 | 2.54 | / |
| Embodiment 3 | 5.5 | 0.5 | 0.8 | 491 | 525 | 10.5 | 126 | 2.93 | / |
| Embodiment 4 | 5.3 | 0.3 | 0.4 | 448 | 507 | 11.5 | 125 | 2.68 | / |
| Embodiment 5 | 4.8 | 0.8 | 0.12 | 482 | 521 | 10.0 | 118 | 3.32 | / |
| Embodiment 6 | 5.0 | 0.4 | 0.4 | 485 | 517 | 10.5 | 128 | 2.75 | / |
| Embodiment 7 | 5.2 | 0.3 | 0.4 | 478 | 513 | 10.5 | 129 | 2.84 | / |
| Embodiment 8 | 5.0 | 0.3 | 0.3 | 480 | 515 | 10.0 | 117 | 3.35 | / |
| Embodiment 9 | 5.3 | 0.34 | 0.67 | 490 | 520 | 10.0 | 119 | 3.25 | / |
| Embodiment 10 | 4.5 | 0.3 | 0.2 | 478 | 508 | 11.3 | 125 | 2.97 | / |
| Embodiment 11 | 5.5 | 0.3 | 0.3 | 490 | 516 | 11.0 | 129 | 2.84 | / |
| Embodiment 12 | 5.4 | 0.2 | 0.4 | 473 | 511 | 11.5 | 127 | 2.79 | / |
| Embodiment 13 | 5.7 | 0.2 | 0.2 | 477 | 512 | 12.5 | / | / | 55.3 |
| Embodiment 14 | 4.2 | 0.3 | 0.3 | 449 | 514 | 11.5 | / | / | 56.1 |
| Embodiment 15 | 5.5 | 0.4 | 0.7 | 483 | 519 | 11.0 | / | / | 54.2 |
| Embodiment 16 | 5.1 | 0.2 | 0.4 | 453 | 519 | 12.0 | / | / | 53.9 |
| Embodiment 17 | 5.4 | 0.3 | 0.4 | 479 | 518 | 10.5 | / | / | 52.4 |
| Embodiment 18 | 5.2 | 0.3 | 0.5 | 485 | 520 | 11.0 | / | / | 53.5 |
| Embodiment 19 | 5.6 | 0.3 | 0.4 | 481 | 510 | 11.0 | 129 | 2.92 | / |
| Embodiment 20 | 5.2 | 0.4 | 0.6 | 476 | 505 | 11.5 | 130 | 2.90 | / |
| Comparative Embodiment 1 | 3.8 | 0.4 | 1.7 | 468 | 490 | 9.5 | 134 | 3.76 | / |
| Comparative Embodiment 2 | 5.5 | 0.3 | 0.4 | 470 | 503 | 10.5 | 128 | 3.23 | / |
| Comparative Embodiment 3 | 5.4 | 0.3 | 0.3 | 489 | 519 | 8.5 | 117 | 3.94 | / |
| Comparative Embodiment 4 | 0.0 | 3.5 | 0.2 | 422 | 483 | 9.5 | 109 | 3.99 | / |
| Comparative Embodiment 5 | 3.7 | 0.6 | 1.3 | 465 | 492 | 9.5 | / | / | 52.7 |
| Comparative Embodiment 6 | 5.2 | 0.2 | 0.3 | 458 | 491 | 11.0 | / | / | 52.0 |
| Comparative Embodiment 7 | 5.3 | 0.3 | 0.4 | 490 | 518 | 8.5 | / | / | 49.7 |
| Comparative Embodiment 8 | 0.0 | 3.1 | 0.1 | 424 | 480 | 9.0 | / | / | 46.7 |

With respect to the preparation method for the 2xxx-series aluminum alloy plate, compared with Comparative Embodiment 1, Embodiments 1-12 increased the proportion of the Ω phase in the material and overall improved both the strength and damage tolerance of the material by increasing the Ag content. Compared with Comparative Embodiment 2, Embodiments 1-12 effectively controlled the grain structure characteristics by adding a trace amount of Zr element, thereby improving the damage tolerance of the alloy. Compared with Comparative Embodiment 3, Embodiments 1-12 significantly improved the damage tolerance of the material by reducing the contents of impurity elements such as Fe and Si. Compared with the conventional 2524 alloy shown in Comparative Embodiment 4, Embodiments 1-12 simultaneously and substantially improved the strength and damage tolerance of the material by increasing the primary alloying element Cu, adding the Ω phase forming element Ag, and employing matching preparation process settings. Similarly, with respect to the preparation method for an extruded product of 2xxx-series aluminum alloy, the comparative effects between Comparative Embodiments 5-8 and Embodiments 13-18 were similar to those for the above 2xxx-series aluminum alloy plate, and Embodiments 13-18 obtained an extruded product exhibiting higher strength and higher damage tolerance.

Based on the above results, compared with the comparative embodiments, the embodiments of the present invention demonstrated that, by optimizing the ratio of major elements and micro-alloying elements, in the provided Al-Cu-Mg-Ag-Mn-Zr system alloy, the elements cooperated synergistically to form strengthening phases dominated by the Ω phase. The formation of this phase enabled the alloy to simultaneously achieve high strength and high damage tolerance. Furthermore, it was observed that when all process parameters were within the preferred ranges of the present invention, the 2xxx aluminum alloy exhibited better strength and high damage tolerance.

The above is only the preferred embodiments of the present invention, and is not intended to limit the present invention, and for those of ordinary skill in the art, various modifications and changes may be made to the present invention. Any modifications, equivalent substitutions, improvements, etc. within the spirit and principle of the present invention shall be included in the scope of protection of the present invention.

## Claims

1. A high-strength and damage-tolerant 2xxx series aluminum alloy, wherein, by weight percentage, the composition of the aluminum alloy comprises:
Cu: 4.5-5.5%, Mg: 0.5-1.2%, Mn: 0.2-0.5%, Ag: 0.65-1.2%, Fe<0.1%, Si<0.1%, Zr: 0.05-0.1%, with the balance being Al and inevitable impurities, wherein each inevitable impurity is <0.05%, and a total amount of impurities is <0.1%;
wherein a weight ratio of Cu to Mg is 5-10.

2. The 2xxx series aluminum alloy according to claim 1, wherein, by weight percentage, the composition of the aluminum alloy comprises:
Cu: 4.8-5.2%, Mg: 0.6-0.9%, Mn: 0.2-0.5%, Ag: 0.7-1.0%, Fe<0.1%, Si<0.1%, Zr: 0.05-0.08%, with the balance being Al and inevitable impurities, wherein each inevitable impurity is <0.05%, and the total amount of impurities is <0.1%;
wherein the weight ratio of Cu to Mg is 6-8.

3. The 2xxx series aluminum alloy according to claim 1 or 2, wherein,
a weight ratio of Ag to Mg is 1-1.5.

4. The 2xxx series aluminum alloy according to claim 1 or 2, wherein,
a sum of weight percentages of Fe and Si is <0.15%.

5. The 2xxx series aluminum alloy according to claim 1 or 2, wherein, in the 2xxx series aluminum alloy,
a volume fraction of an Ω phase is 4-6%; and/or
a volume fraction of an S phase is <1%; and/or
a volume fraction of a θ phase is <1%.

6. The 2xxx series aluminum alloy according to claim 5, wherein, in the 2xxx series aluminum alloy,
a ratio of a volume of the Ω phase to a sum of volumes of the S phase and the θ phase is >5.

7. A preparation method for the high-strength and damage-tolerant 2xxx series aluminum alloy according to any one of claims 1 to 6, comprising the following steps:
S1, sequentially mixing, melting, refining, and casting raw materials according to a compositional ratio to obtain an aluminum alloy ingot;
S2, sequentially subjecting the aluminum alloy ingot to homogenization annealing and cooling to obtain a homogenized ingot;
S3, sequentially heating and processing the homogenized ingot to obtain a processed plate;
S4, sequentially subjecting the processed plate to solid solution treatment and quenching to obtain a quenched plate; and
S5, sequentially subjecting the quenched plate to pre-deformation and aging treatment to obtain the 2xxx series aluminum alloy.

8. The preparation method according to claim 7, wherein, in the S2,
a temperature of the homogenization annealing is 450-550 °C, and a time thereof is18-22 h.

9. The preparation method according to claim 7 or 8, wherein, in the S3,
a final temperature of the heating is 360-460 °C, and a holding time thereof is 5-10 h; and/or
the processing comprises one or more of rolling, extrusion, and forging.

10. The preparation method according to claim 7 or 8, wherein, in the S4,
a temperature of the solid solution treatment is 480-540 °C, and a time thereof is 2-1200 min; and/or
the quenching comprises spray quenching and/or immersion quenching.

11. The preparation method according to claim 10, wherein, in the S4,
when the quenching is the spray quenching, a cooling rate of the quenching is >500 °C/min;
when the quenching is the immersion quenching, a cooling rate of the quenching is >600 °C/min.

12. The preparation method according to claim 7 or 8, wherein, in the S5,
the aging comprises natural aging and/or artificial aging.

13. The preparation method according to claim 12, wherein, in the S5,
when the aging is the natural aging, a time of the aging is ≥96 h, and a total amount of the pre-deformation is ≤2%; and the pre-deformation comprises pre-stretching and/or straightening treatment.

14. The preparation method according to claim 12, wherein, in the S5,
when the aging is the artificial aging, a temperature of the aging is 150-250 °C, a time thereof is 5-20 h, and a total amount of the pre-deformation is 1-4%; and the pre-deformation comprises pre-stretching.

15. Use of the high-strength and damage-tolerant 2xxx series aluminum alloy according to any one of claims 1 to 6 in the aerospace field.
